# EUROPÄISCHE PATENTSCHRIFT

(11) **EP 3 589 868 B1**
(45) Veröffentlichungstag und Bekanntmachung des Hinweises auf die Patenterteilung: **28.12.2022**
(21) Anmeldenummer: 18705823.5
(22) Anmeldetag: 06.02.2018
(51) Int. Cl.: F16J 9/14

(54) **KOLBENRING**
PISTON RING
SEGMENT DE PISTON

(30) Priorität: 01.03.2017 DE 102017104221
(43) Veröffentlichungstag der Anmeldung: 08.01.2020
(73) Patentinhaber: Federal-Mogul Burscheid GmbH, 51399 Burscheid (DE)
(72) Erfinder: BÄRENREUTER, Dirk, 51519 Odenthal (DE); KELLNER, Markus, 51375 Leverkusen (DE)
(74) Vertreter: Döpp, Ludger
(86) Internationale Anmeldenummer: PCT/DE2018/100098
(87) Internationale Veröffentlichungsnummer: WO 2018/157880

(56) Entgegenhaltungen:
- EP-B1- 2 499 402
- DE-A1- 4 441 136
- DE-A1-102007 007 960
- JP-A- H03 125 077

## Beschreibung

Die Erfindung betrifft einen Kolbenring, insbesondere einen Kompressionskolbenring, gemäß gattungsbildendem Teil des ersten Patentanspruchs.

Kompressionskolbenringe sind dem Brennraum zugewandt und den dort gegebenen Verbrennungsgasen ausgesetzt, wobei der offene Stoß einen Durchtrittsbereich für Verbrennungsgase bildet. Insbesondere bei mit PVD- oder CVD-Schichten versehenen Kolbenringen sind in der Nähe des Stoßes Schichtabplatzer zu verzeichnen.

Die EP 2 499 402 B1 offenbart einen Kolbenring, insbesondere einen Kompressionskolbenring, beinhaltend eine Lauffläche, obere und untere Flankenbereiche, eine innere Umfangsfläche sowie einen Stoß, wobei die Wanddicke des Kolbenrings, über seinen Umfang gesehen, gleich ausgebildet und zumindest die Lauffläche mit einer einzelnen PVD- oder CVD-Schicht versehen ist. Die Lauffläche weist in den stoßnahen Umfangsbereichen, ausgehend von einer jeweiligen Stoßkante des Stoßes, bis zu einem Umfangswinkel < 20° eine höhere Rauigkeit als im übrigen Umfangsbereich der Lauffläche und eine geringere Schichtstärke als die Schichtstärke im übrigen Umfangsbereich der Lauffläche auf.

Der JP H03 125077 A ist ein Kolbenring zu entnehmen, dessen Lauffläche mit einer umlaufenden Nut versehen ist. Die Nut endet im Bereich der Stoßenden, so dass an beiden Stoßenden eine Art Steg gebildet wird. Die Nut wird mit einer thermischen Spritzschicht ausgefüllt und der Kolbenring wird abschließend bearbeitet, so dass die stoßseitigen Stegabschnitte beschichtungsfrei sind.

Der Erfindung liegt die Aufgabe zugrunde, ein alternatives Kolbenringdesign bereitzustellen, bei welchem die heißen Verbrennungsgase, welche durch den Stoßspalt strömen, die aufgebrachte Laufflächenschicht nicht beschädigen.

Der Erfindung liegt des Weiteren die Aufgabe zugrunde, ein Verfahren zur Herstellung eines Kolbenrings vorzuschlagen, mit welchem ein Kolbenring so bearbeitet werden kann, dass Schichtausbrüche im Betriebszustand weitestgehend vermieden werden können.

Diese Aufgabe wird bei einem Kolbenring, insbesondere einem Kompressionskolbenring, dadurch gelöst, dass sich die als TaC-Schicht ausgebildete PVD- oder CVD-Schicht mit vorgebbarer Schichtstärke über eine Umfangslänge von mehr als 95 %, jedoch weniger als 100 % des Kolbenrings erstreckt und definierte Umfangsabschnitte im Bereich des Stoßes schichtfrei ausgebildet sind, wobei die TaC-Schicht eine Schichtstärke zwischen 5 und 30 µm aufweist, und wobei die radiale Wandstärke des Kolbenrings im fertig bearbeiteten Zustand derart ist, dass die beschichteten Umfangsbereiche des Kolbenrings den nicht beschichteten Umfangsabschnitten wandstärkenmäßig entsprechen.

Vorteilhafte Weiterbildungen des Erfindungsgegenstandes sind dem gegenständlichen Unteranspruch zu entnehmen.

Die Aufgabe wird auch gelöst durch ein Verfahren zur Herstellung eines Kolbenrings, wobei ein mit einem Stoß versehener Kolbenringgrundkörper aus Grauguss oder Stahl bereitgestellt wird, der über eine definierte Umfangslänge eine größere radiale Wandstärke als der restliche Umfangsbereich aufweist, zumindest die gesamte Lauffläche des Kolbenrings bis hin zum Stoß mit mindestens einer als TaC-Shicht ausgebildeten PVD- oder CVD-Schicht versehen wird und die PVD- oder CVD-Schicht über einen definierten Umfangsabschnitt außerhalb des Stoßes bis auf das Grundmaterial des Kolbenrings abgetragen wird.

Vorteilhafte Weiterbildungen des erfindungsgemäßen Verfahrens sind dem zugehörigen verfahrensgemäßen Unteranspruch entnehmen.

Mit dem Erfindungsgegenstand, respektive dem erfindungsgemäßen Verfahren, ist es nun möglich, dass die heißen Verbrennungsgase, welche durch den Stoßspalt strömen, nicht unmittelbar an die verschleißfeste TaC-Schicht, herankommen.

Abplatzer im stoßnahen Umfangsbereich des Kolbenrings werden somit vermieden. Da die eigentliche Verschleißschutzschicht nunmehr räumlich von den heißen Verbrennungsgasen im Stoßspalt getrennt ist, wird die Schicht auch nicht einer so hohen thermischen Belastung ausgesetzt, so dass das Risiko von Abplatzern der Schicht aufgrund thermischer Belastung somit reduziert wird.

Die TaC-Schicht, weist eine Schichtstärke zwischen 5 und 30 µm auf Einem weiteren Gedanken der Erfindung gemäß wird vorgeschlagen, die radiale Wandstärke des Kolbenrings im fertig bearbeiteten Zustand derart auszubilden, dass die beschichteten Umfangsbereiche des Kolbenrings den nicht beschichteten Umfangsabschnitten entsprechen, so dass, über die gesamte Umfangsfläche des Kolbenrings gesehen, eine identische radiale Wandstärke gegeben ist.

Von Vorteil kann sein, dass die Rauigkeit der beschichteten Umfangsbereiche zu denjenigen der nicht beschichteten Umfangsabschnitte unterschiedlich ist. Hierbei kann es sinnvoll sein, dass die Rauigkeit der beschichteten Umfangsabschnitte in Abhängigkeit vom Grundwerkstoff des Kolbenrings andersartig als die der nicht beschichteten Umfangsabschnitte ist.

Der Erfindungsgegenstand ist anhand eines Ausführungsbeispiels in der Zeichnung dargestellt und wird wie folgt beschrieben. Es zeigen:
- Figur 1: Draufsicht auf einen fertig bearbeiteten Kolbenring;
- Figuren 2 und 3: Unterschiedliche Schnitte durch den Kolbenring gemäß Figur 1.

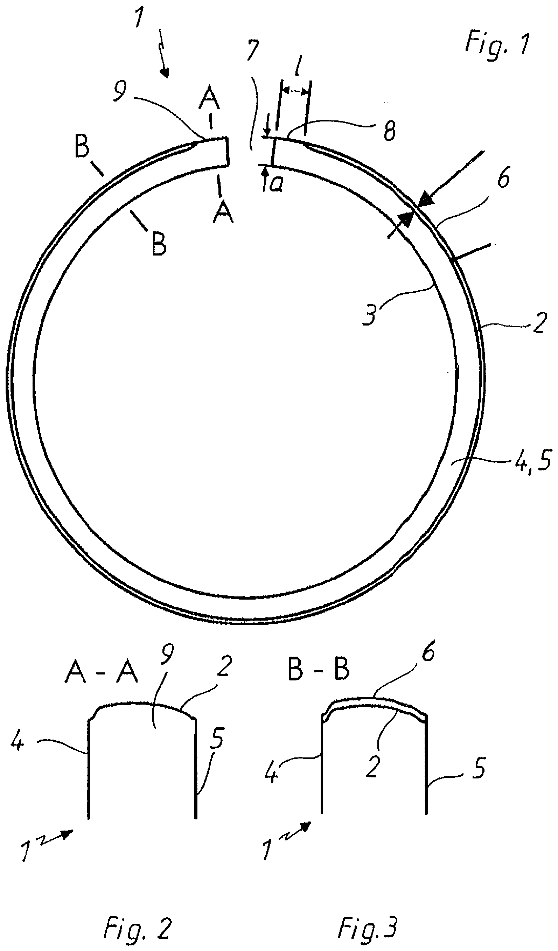

Figur 1 zeigt einen als Kompressionsring ausgebildeten Kolbenring 1, beinhaltend eine Lauffläche 2, eine innere Umfangsfläche 3 sowie obere und untere Flankenbereiche 4,5. Der Kolbenring 1 ist im Bereich seiner Lauffläche 2 mit einer als TaC-Schicht ausgebildeten verschleißfesten Schicht 6 versehen, die in diesem Beispiel eine Schichtstärke von 15 µm aufweisen soll. Das Grundmaterial des Kolbenrings 1 soll in diesem Beispiel aus Grauguss bestehen.

Der Kolbenring 1 ist des Weiteren mit einem Stoß 7 versehen. Im fertigen Zustand des Kolbenrings 1 ist selbiger beiderseits des Stoßes 7 über eine vorgebbare Umfangslänge I mit einem nicht beschichteten Umfangsabschnitt 8,9 versehen. Durch diese Maßnahme wird sichergestellt, dass im Bereich des Stoßes 7 durchtretende Verbrennungsgase nicht unmittelbar in den Bereich der TaC-Schicht 6 gelangen können. Schichtabplatzer im Bereich des Stoßes 7 werden somit zumindest reduziert, wenn nicht gar unterbunden.

Im fertig bearbeiteten Zustand weist der Kolbenring 1 eine radiale Wandstärke a auf, die sowohl im beschichteten Bereich als auch im nicht beschichteten Umfangsabschnitt I gleich ist. Die Rauigkeiten beider Bereiche sind jedoch unterschiedlich vorgesehen.

Figur 2 zeigt einen Schnitt A-A durch den beschichtungsfreien Umfangsabschnitt 9 des Kolbenrings 1. Erkennbar ist neben der Lauffläche 2 die obere Flankenfläche 4 sowie die untere Flankenfläche 5.

Figur 3 zeigt einen Schnitt B-B durch einen beschichteten Bereich des Kolbenrings 1. Erkennbar ist auch hier die Lauffläche 2, die obere Flankenfläche 4 sowie die untere Flankenfläche 5. Darüber hinaus ist die TaC-Schicht 6 angedeutet.

## Patentansprüche

1. Kolbenring, insbesondere Kompressionskolbenring (1), beinhaltend eine Lauffläche (2), obere und untere Flankenbereiche (4,5), eine innere Umfangsfläche (3) sowie einen Stoß (7), wobei zumindest die Lauffläche (2) mit mindestens einer verschleißfesten PVD- oder CVD-Schicht (6) versehen ist, **dadurch gekennzeichnet, dass** sich die als TaC-Schicht ausgebildete PVD- oder CVD-Schicht (6) mit vorgebbarer Schichtstärke über eine Umfangslänge von mehr als 95 %, jedoch weniger als 100 % des Kolbenrings (1) erstreckt und definierte Umfangsabschnitte (8,9) im Bereich des Stoßes (7) schichtfrei ausgebildet sind, wobei die TaC-Schicht (6) eine Schichtstärke zwischen 5 und 30 µm aufweist, und wobei die radiale Wandstärke (a) des Kolbenrings (1) im fertig bearbeiteten Zustand derart ist, dass die beschichteten Umfangsbereiche des Kolbenrings (1) den nicht beschichteten Umfangsabschnitten (8,9) wandstärkenmäßig entsprechen.

2. Kolbenring nach Anspruch 1, **dadurch gekennzeichnet, dass** die Rauigkeiten der beschichteten Umfangsbereiche zu denjenigen der nicht beschichteten Umfangsabschnitte (8,9) unterschiedlich sind.

3. Verfahren zur Herstellung eines Kolbenrings gemäß einem der Ansprüche 1 oder 2, **dadurch gekennzeichnet, dass** ein mit einem Stoß (7) versehener Kolbenringgrundkörper aus Grauguss oder Stahl bereitgestellt wird, der über eine definierte Umfangslänge eine größere radiale Wandstärke als der restliche Umfangsbereich aufweist, zumindest die gesamte Lauffläche (2) des Kolbenrings (1) bis hin zum Stoß mit mindestens einer als TaC-Shicht ausgebildeten PVD- oder CVD-Schicht (6) versehen wird und die PVD- oder CVD-Schicht (6) über einen definierten Umfangsabschnitt (8,9) außerhalb des Stoßes (7) bis auf das Grundmaterial des Kolbenrings (1) abgetragen wird.

4. Verfahren nach Anspruch 3, **dadurch gekennzeichnet, dass** die Schicht (6) im Bereich des Stoßes (7) insbesondere durch Schleifen bis auf das Grundmaterial des Kolbenrings (1) mechanisch abgetragen wird.

## Claims

1. A piston ring, in particular compression piston ring (1), containing a running surface (2), upper and lower flank regions (4, 5), an inner peripheral surface (3) as well as a joint (7), wherein at least the running surface (2) is provided with at least one wear-resistant PVD or CVD coating (6), **characterized in that** the PVD or CVD coating (6), which is formed as TaC coating, extends with a predeterminable coating thickness over a peripheral length of more than 95%, but less than 100% of the piston ring (1), and defined peripheral sections (8, 9) in the region of the joint (7) are formed in a coating-free manner, wherein the TaC coating (6) has a coating thickness of between 5 and 30 µm, and wherein the radial wall thickness (a) of the piston ring (1) in the finished state is such that the coated peripheral regions of the piston ring (1) correspond in terms of wall thickness to the non-coated peripheral sections (8, 9).

2. The piston ring according to claim 1, **characterized in that** the roughnesses of the coated peripheral regions differ from those of the non-coated peripheral sections (8, 9).

3. A method for producing a piston ring according to one of claims 1 or 2, **characterized in that** a piston ring base body made of grey cast iron or steel, which is provided with a joint (7), is provided, which, viewed over a defined peripheral length, has a greater radial wall thickness than the remaining peripheral region, at least the entire running surface (2) of the piston ring (1) up to the joint is provided with at least one PVD or CVD coating (6), which is formed as TaC coating, and the PVD or CVD coating (6) is removed down to the base material of the piston ring (1) over a defined peripheral section (8, 9) outside of the joint (7).

4. The method according to claim 3, **characterized in that** the coating (6) in the region of the joint (7) is removed mechanically down to the base material of the piston ring (1), in particular by means of grinding.

## Revendications

1. Segment de piston, en particulier segment de piston de compression (1), contenant une surface de roulement (2), des zones de flanc supérieure et inférieure (4, 5), une surface périphérique intérieure (3) et un joint (7), dans lequel au moins la surface de roulement (2) est pourvue d'au moins une couche PVD ou CVD (6) résistante à l'usure, **caractérisé en ce que** la couche PVD ou CVD (6) conçue comme couche TaC s'étend avec une épaisseur de couche prédéterminée sur une longueur circonférentielle de plus de 95%, mais moins de 100% du segment de piston (1) et des sections périphériques définies (8, 9) sont formées sans couches dans la zone du joint (7), dans lequel la couche de TaC (6) présente une épaisseur de couche comprise entre 5 et 30 µm, et dans lequel l'épaisseur de paroi radiale (a) du segment de piston (1) à l'état fini est telle que les zones périphériques revêtues du segment de piston (1) correspondent aux sections périphériques non revêtues (8, 9) en termes d'épaisseur de paroi.

2. Segment de piston selon la revendication 1, **caractérisé en ce que** la rugosité des zones périphériques revêtues est différente de celle des sections périphériques non revêtues (8, 9).

3. Procédé de réalisation d'un segment de piston selon une des revendications 1 ou 2, **caractérisé en ce qu'**il est prévu un corps de base de segment de piston en fonte grise ou en acier et muni d'un joint (7), qui présente une épaisseur de paroi radiale plus importante sur une longueur circonférentielle définie supérieure à la surface circonférentielle restante, au moins toute la surface de roulement (2) du segment de piston (1) jusqu'à l'articulation est pourvue d'au moins une couche PVD ou CVD (6) réalisée sous forme de couche TaC et la couche PVD ou CVD (6) est éliminée sur une section périphérique définie (8, 9) à l'extérieur du joint (7) jusqu'au matériau de base du segment de piston (1).

4. Procédé selon la revendication 3, **caractérisé en ce que** la couche (6) au niveau du joint (7) est éliminée mécaniquement notamment par meulage jusqu'au matériau de base du segment de piston (1).
